# EUROPEAN PATENT APPLICATION

(11) **EP 4 793 061 A1**
(43) Date of publication of application: **19.08.2026**
(21) Application number: 25158377.9
(22) Date of filing: 17.02.2025
(51) Int. Cl.: B60B 15/00, B60C 11/02

(54) **VEHICLE WHEEL**

(71) Applicant: Pilot Events Sarl, 1471 Luxembourg (LU)
(72) Inventor: HILDENBRAND, Arnaud, 1471 Luxembourg (LU)
(74) Representative: Aronova

(57) **Abstract**

The present invention relates to a vehicle wheel (10), comprising: a rim (12) having an outward side and tire (14) mounted on the rim, the tire having a tread (16). The wheel further comprises an annular tire overlay (18) overlaying the tread so as to prevent contact between the tread and the ground, the annular tire overlay having an outward ring (22), the outward ring providing an inward axial securement to the annular tire overlay. Furthermore, a flange (26) is mounted on the outward side (28) of the rim, the flange extending radially from the rim for providing an outward axial securement to the annular tire overlay. The present invention also relates to a vehicle having such wheel and to a method for using such vehicle wheel.

## Description

### Field of the Invention

The invention generally relates to a vehicle wheel having an annular tire overlay, a vehicle having said vehicle wheel and a method for using said vehicle wheel.

### Background of the Invention

Learning to drive can be a daunting experience, especially when faced with challenging road conditions such as ice, snow, or wet surfaces. Skidding aids are invaluable tools that can help new drivers gain confidence and improve their skills in these situations.

By incorporating skidding aids into, for example, driving lessons, instructors can provide a safer and more controlled environment for students to practice essential driving techniques. These tools help learners understand how to handle their vehicles in adverse conditions, teaching them how to prevent and recover from skids effectively. As a result, new drivers can build their confidence and competence, ensuring they are well-prepared for real-world driving scenarios.

For example, WO 2006/018566 relates to a device for reproducing driving conditions on a slippery road for a vehicle provided with wheels comprising a removable belt thread fixable to one or several wheels of the vehicle whose adhesion power is less than that of the wheels of the vehicle. A method for assembling the inventive device on a wheel provided with a tyre. It may be used for mechanical sports and for training to drive in adhesion-loss conditions.

Another example is WO 2008/093242 relating to an annular tyre overlay for drawing onto the rolling surface of tyres, which has a tread on its outside and a gripping surface on its inside, which tyre overlay is so designed that contact between the rolling surface of the tyre and the surfacing of the road is prevented by the tyre overlay when the tyre overlay has been drawn onto a tyre. The tyre overlay is provided with a flange which stops the tyre overlay from shifting in the axial direction of the wheel. Advantageously, the tyre overlay is additionally stiffened by a flange of planar form to keep the contact area on the surface below small.

### General Description

A first aspect of the present invention relates to a vehicle wheel (e.g; a car wheel, a truck wheel), comprising: a rim having an outward side and tire mounted on the rim, the tire having a tread. The wheel further comprises an annular tire overlay overlaying the tread so as to prevent contact between the tread and the ground, the annular tire overlay having an outward ring, the outward ring providing an inward axial securement to the annular tire overlay. Furthermore, a flange is mounted on the outward side of the rim, the flange extending radially from the rim for providing an outward axial securement to the annular tire overlay.

Typically, the annular tire overlay acts as a skidding aid in that it has a lower coefficient of friction than the one of tire. This enables skidding at lower speeds, thereby providing a more secure environment for e.g. driving lessons. It will also be appreciated that the present invention allows for axially securing the annular tire overlay, both in the inward and outward direction, thereby achieving a complete axial securement of the annular tire overlay. Such design for axial securement is also compact and does not impede normal operation of the vehicle, nor substantially increase the width of the vehicle. This allows to reproduce near real driving conditions.

"Axial" and "axially" are used herein to refer to lines or directions that are parallel to the axis of rotation of the tire.

"Radial" and "radially" are used to mean directions radially toward or away from the axis of rotation of the tire.

"Rim" means a support for a tire or a tire and tube assembly upon which the tire bead regions are seated. A rim typically comprises rim flanges on its axial extremities.

The "tread" of a tire is the part is designed to come into direct contact with the road. It may comprise grooves, patterns, and rubber compounds. Typically, the tread's design helps channel water away to prevent hydroplaning, enhances grip on various surfaces, and contributes to the overall performance and safety of the vehicle.

In the present document, "outward" generally means in a direction going away from the vehicle or not facing the vehicle. For example, an outward side of the rim is the side of the rim that is visible when the tire is mounted to the vehicle. Also, an outward ring of the annular tire overlay is a ring that is located as far away as possible from the vehicle. Conversely, "inward" generally means in a direction towards the vehicle. For example, an inward axial securement is a securement in the axial direction with respect to movements towards the vehicle.

As used herein, a "flange" is a projecting element used for maintaining position of the annular tire overlay.

In an embodiment, the tire has a sidewall and the flange extends radially at least up until the sidewall of the tire. "Sidewall" designates the axially outer parts of a tire that provide protection for the carcass ply or plies and withstand flexing and weathering.

In an embodiment, the tire has an outer shoulder and the flange extends radially up until the outer shoulder of the tire. The "outer shoulder" of a tire is the area where the tread meets the sidewall.

The flange may provide an abutment surface to the outward ring of the annular tire overlay so as to provide an outward axial securement to the annular tire overlay.

The annular tire overlay comprises, or consists of, one or more plastic materials, e.g. PVC, PE, PU, PTFE and/or polyamides.

The flange may comprise, or consists of, at last one of the following materials: a metal, a metal alloy and a plastic. Examples of metal are steel, aluminum, and titanium. Examples of metal alloys are stainless steel and steel alloys. Examples of plastics are PVC, PE, PU, PTFE, polyamides and fiber reinforced plastics.

In a preferred embodiment, the flange is removably mounted on the outward side of the rim.

The vehicle wheel may comprise one or more additional flanges mounted on the outward side of the rim, the additional flanges extending radially from the rim for providing an outward axial securement to the annular tire overlay.

The one or more additional flanges may be removably mounted on the outward side of the rim.

In an embodiment, the flange is mounted on the outward side of the rim by screws, glue, collar brackets and/or cable tie clamps.

In an embodiment, the flange has a thickness, in the axial direction, comprised in the range from 0.1 cm to 5 cm.

In an embodiment, the flange has a thickness, in the axial direction, comprised in the range from 0.3 cm to 3 cm, preferably in the range from 1 cm to 2.5 cm, even more preferably in the range from 1.5 cm to 2 cm. Preferably, in this case, the flange comprises, or consists of, plastic material.

In an embodiment, the flange has a thickness, in the axial direction, comprised in the range from 0.1 cm to 1.5 cm, preferably in the range from 0.2 cm to 1.5 cm, even more preferably in the range from 0.3 cm to 1 cm. Preferably, in this case, the flange comprises, or consists of, a metal and/or a metal alloy.

In an embodiment, the flange has one of the following radial cross-section: a polygon, a circle, an oval, an ellipse or a combination thereof. Examples of polygons are: triangles, tetragons, pentagons, hexagons, heptagons, nonagon, decagon, etc.

In an embodiment, at least one of the edges (or all the edges) of the flanges are bevelled and/or curved. This helps avoiding sharp edges which may injure operators e.g. during mounting of the flange.

A second aspect of the present invention relates to a vehicle (e.g. a car or a truck) comprising one or more vehicle wheels according to the first aspect of the present invention. The one or more vehicle wheels may be mounted on driven wheels and/or non-driven wheels. The vehicle may be a rear-wheel drive (RWD), an all-wheel drive vehicle (AWD) or a front-wheel drive (FWD).

A third aspect of the present invention relates to a method for using the vehicle wheels according to the first aspect of the present invention, comprising mounting the vehicle wheel to a vehicle (such as a vehicle according to the second aspect of the present invention), and preferably driving the car.

In the present document, the verb "to comprise" and the expression "to be comprised of" are used as open transitional phrases meaning "to include" or "to consist at least of", not excluding the presence of further features or components. Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When this description refers to "an embodiment", "one embodiment", "embodiments", etc., this means that the features of those embodiments can be used in the combination explicitly presented but also that the features can be combined across embodiments without departing from the invention, unless it follows from context that features cannot be combined.

### Brief Description of the Drawings

By way of example, preferred, non-limiting embodiments of the invention will now be described in detail with reference to the accompanying drawings, in which:
**Fig. 1****:** is a schematic representation of a radial cross-section of a vehicle wheel according to an embodiment of the present invention;
**Fig. 2****:** is a schematic representation of a radial cross-section of a vehicle wheel according to a further embodiment of the present invention; and
**Fig. 3****:** is a schematic representation of the outward side of the rim equipped with a flange according to several embodiments of the present invention.

The reader's attention is drawn to the fact that the drawings are not to scale. Furthermore, for the sake of clarity, proportions between height, length and/or width may not have been represented correctly.

### Detailed Description of Preferred Embodiments of the Invention

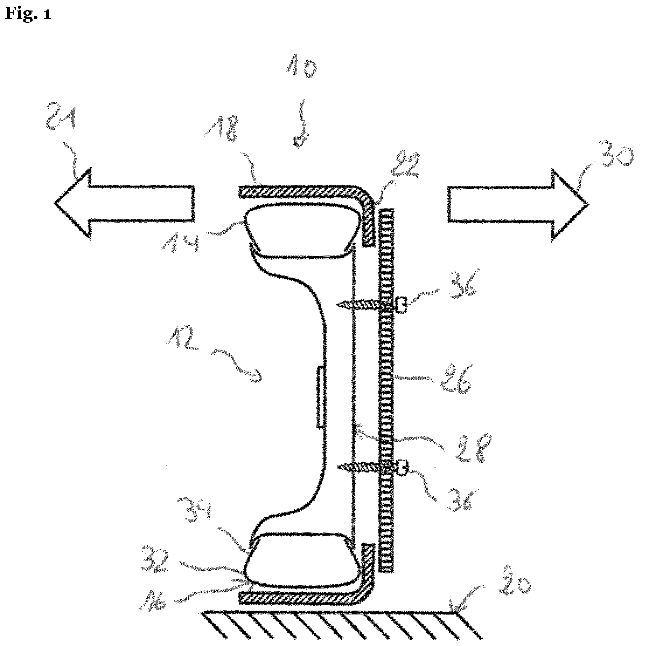

Fig 1 shows a schematic representation of a radial cross-section of a vehicle wheel 10 according to an embodiment of the present invention. The wheel 10 comprises a rim 12 and a tire 14 mounted on the rim 12. The tire has a tread 16. The wheel 10 further comprises an annular tire overlay 18 overlaying the tread so as to prevent contact between the tread 16 and the ground 20. Furthermore, the annular tire overlay has an outward ring 22, the outward ring 22 providing an inward axial 24 securement to the annular tire overlay. By inward axial securement, it is meant that the outward ring 22 provides means for avoiding contact between the tire 14 and the ground 20 to be restored by an axially inward 24 movement of the annular tire overlay 18 with respect to the tire 14. In addition, the wheel 10 comprises a flange 26 mounted on the outward side 28 of the rim 12. The flange extends radially from the rim 12 for providing an outward axial 30 securement to the annular tire overlay 18. By outward axial 30 securement it is meant that the flange 26 provides means for avoiding contact between the tire 14 and the ground 20 to be restored by an axially outward 30 movement of the annular tire overlay 18 with respect to the tire 14. It will be appreciated that a wheel according to the present embodiment allows for a full (inward and outward) securement of the annular tire overlay 18).

In the present embodiment, the flange 26 extends radially up until the outer shoulder 32 of the tire 14. In other embodiments, the flange 26 may extend radially until the sidewall 34 of the tire 14.

The flange 18 provides an abutment surface to the outward ring 24 of the annular tire overlay 18 so as to provide an outward axial 30 securement to the annular tire overlay 18.

In the present embodiment, the flange 26 is mounted to the outward side 28 of the rim 12 by screws 36. Of course, other mounting elements may be used such as glue, collar brackets, studs, nuts, straps, clips and cable tie clamps. Also, the flange 26 may be mounted through the wheel rim studs. A combination of the aforementioned mounting elements is also contemplated.

In embodiments, the flange 26 is removably mounted on the outward side of the rim. Advantageously, the mounting elements allow for a noninvasive mounting of the flange 26 to the outward side 28 of the rim 12 (e.g. with collar brackets or cable tie clamps). In this case, after unmounting the flange 26, the rim is in its original state (before mounting the flange to the rim).

The tire overlay may comprise one or more plastic materials such as PVC, PE, PU, PTFE and/or polyamides. Typically, the one or more plastic materials are select so that the annular tire overlay 18 acts as a skidding aid in that it has a lower coefficient of friction than the one of tire 14.

The flange may comprise at least one of the following materials: a metal, a metal alloy and a plastic. The flange may consist of one of the aforementioned materials. Examples of metal are steel, aluminum, and titanium. Examples of metal alloys are stainless steel and steel alloys. Examples of plastics are PVC, PE, PU, PTFE, polyamides and fiber reinforced plastics.

Typically, the flange may have a thickness, in the axial direction, comprised in the range from 0.1 cm to 5 cm. In embodiments where the flange comprises or consists of plastics, the thickness, in the axial direction, is optionally comprised in the range from 0.3 cm to 3 cm, preferably in the range from 1 cm to 2.5 cm, even more preferably in the range from 1.5 cm to 2 cm. In embodiments where the flange comprises or is made of a metal or a metal alloy, the flange has a thickness, in the axial direction, optionally comprised in the range from 0.1 cm to 1.5 cm, preferably in the range from 0.2 cm to 1.5 cm, even more preferably in the range from 0.3 cm to 1 cm.

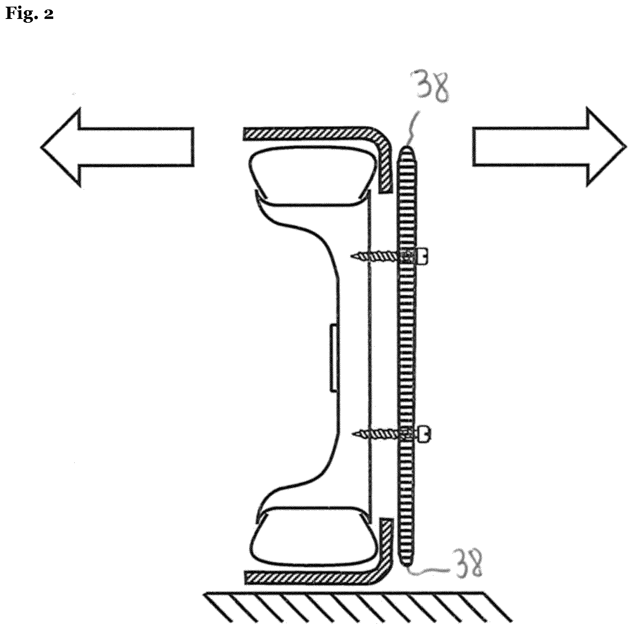

Fig. 2 depicts an embodiment which differs from the one of Fig. 1 only in that at least one of the edges (or all the edges) 38 of the flange 26 is curved. The edges may be bevelled instead of curved. It should be noted that some edges may be curved and other be bevelled, as needed by the application.

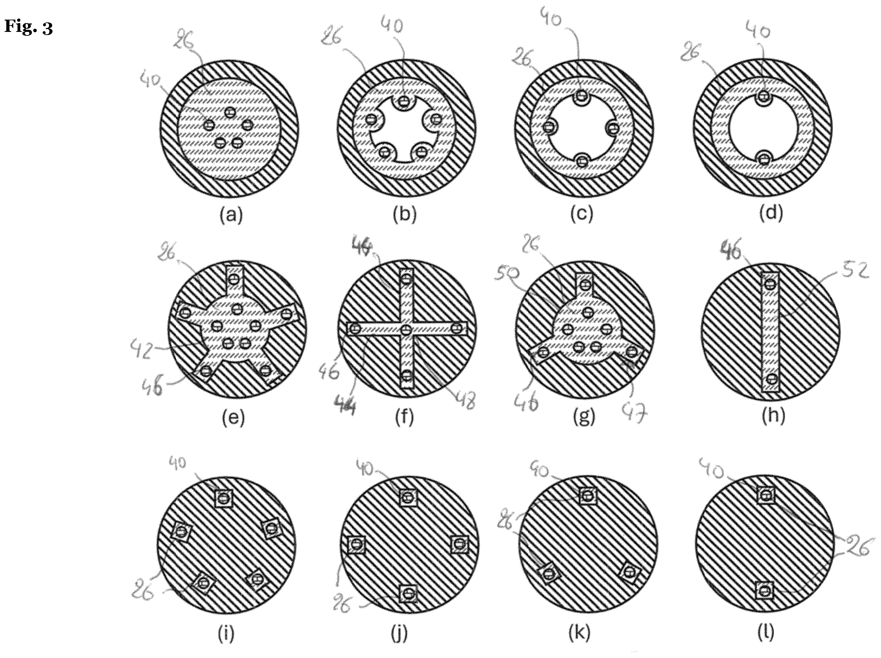

Fig. 3. is a schematic representation of the outward side of the rim equipped with a flange according to several embodiments ((a)-(l)) of the present invention. While all the depicted embodiments are using screws 40, other mounting means, such as the one disclosed in the present document, are contemplated.

Fig. 3(a) depicted an embodiment wherein the flange is disc shaped. The screws 40 are arranged towards the center of the rim as a pentagon. The location of the screws depends on the geometry of the rim, especially the arrangement of rim spokes.

Figs. 3(b)-(d) show variations of a ring-shaped flanges 26 with different screws arrangements, being as a pentagon (b), a rectangle (c) and in a line (d). In order to accommodate the screws, ring protrusions may extend from the ring towards the radial center of the rim. Typically, when mounted, these protrusions are superimposed with the rim spokes.

Figs. 3(e)-(h) show variations of star-shaped flanges 26. In particular:
(e) shows five vertices and a disk-shaped core 42, wherein screws 46 are placed in the core 42 and also on the vertices;
(f) shows two perpendicular segments 44 intersecting at an intersection region 48, wherein screws are placed at the intersection regions 48 and at the edges of the segments 44;
(g) shows three vertices and a disk-shaped core 50, wherein screws 46 are placed in the core 42 and also on the vertices 47; and
(h) shows a single segment 52, wherein screws 46 are placed at the edges of the segment 52.

Figs. 3(i)-(1) show various embodiment using multiple (distinct) flanges for achieving outward said axial securement. In particular five (i), four (j), three (k) and two (l) flanges are used. The flanges are regularly spaced along the perimeter of the tire. For example, adjacent flanges are separated by an angle of 120° for (k). Of course, the flanges may not be regularly spaced. While the flanges are represented with a square cross-section, they may have another cross-section such a rectangular cross-section, a circular cross-section, etc. One or more screws may be used for mounting the flanges to the rim.

Of course, combinations of the embodiments depicted in Fig. 3 are contemplated. For example, additional flanges such as the one depicted in (i)-(l) may be added between the vertices of (f) in order to further secure the annular tire overlay.

The vehicle wheel as disclosed hereinabove may be mounted to a vehicle. Specifically, a plurality of such vehicle wheels may be mounted on driven wheels and/or non-driven wheels. Indifferently, the vehicle may be a rear-wheel drive (RWD), an all-wheel drive vehicle (AWD) or a front-wheel drive (FWD). Indeed, the inventors have noted that a vehicle wheel according to the present invention supresses the risk of the annular tire overlay disengaging from the tire (even on a drive wheel), in strong contrast with the prior art.

Driving such a vehicle enables skidding at lower speeds, thereby providing a more secure environment for e.g. driving lessons

While specific embodiments have been described herein in detail, those skilled in the art will appreciate that various modifications and alternatives to those details could be developed in light of the overall teachings of the disclosure. Accordingly, the particular arrangements disclosed are meant to be illustrative only and not limiting as to the scope of the invention, which is to be given the full breadth of the appended claims and any and all equivalents thereof.

## Claims

1. A vehicle wheel, comprising:
a rim having an outward side;
a tire mounted on the rim, the tire having a tread;
an annular tire overlay overlaying the tread so as to prevent contact between the tread and the ground, the annular tire overlay having an outward ring, the outward ring providing an inward axial securement to the annular tire overlay;
a flange mounted on the outward side of the rim, the flange extending radially from the rim for providing an outward axial securement to the annular tire overlay.

2. The vehicle wheel according to claim 1, the tire having a sidewall, wherein the flange extends radially at least up until the sidewall of the tire.

3. The vehicle wheel according to any one of claims 1 and 2, the tire having an outer shoulder, wherein the flange extends radially up until the outer shoulder of the tire.

4. The vehicle wheel according to any one of claims 1 and 3, wherein the flange provides an abutment surface to the outward ring of the annular tire overlay so as to provide an outward axial securement to the annular tire overlay.

5. The vehicle wheel according to any one of claims 1 and 4, wherein the annular tire overlay comprises one or more plastic materials.

6. The vehicle wheel according to any one of claims 1 and 5, wherein the flange comprises at last one of the following materials: a metal, a metal alloy and a plastic.

7. The vehicle wheel according to any one of claims 1 and 6, wherein the flange is removably mounted on the outward side of the rim.

8. The vehicle wheel according to any one of claims 1 and 7, comprising one or more additional flanges mounted on the outward side of the rim, the additional flanges extending radially from the rim for providing an outward axial securement to the annular tire overlay, preferably the one or more additional flanges are removably mounted on the outward side of the rim.

9. The vehicle wheel according to any one of claims 1 and 8, wherein the flange is mounted on the outward side of the rim by at least one of: screws, glue, collar brackets studs, nuts, straps, clips and cable tie clamps.

10. The vehicle wheel according to any one of claims 1 and 9, wherein the flange has a thickness, in the axial direction, comprised in the range from 0.1 cm to 5 cm.

11. The vehicle wheel according to claim 10, wherein the flange has a thickness, in the axial direction, comprised in the range from 0.3 cm to 3 cm, preferably in the range from 1 cm to 2.5 cm, even more preferably in the range from 1.5 cm to 2 cm.

12. The vehicle wheel according to claim 10, wherein the flange has a thickness, in the axial direction, comprised in the range from 0.1 cm to 1.5 cm, preferably in the range from 0.2 cm to 1.5 cm, even more preferably in the range from 0.3 cm to 1 cm.

13. The vehicle wheel according to any one of claims 1 and 12, wherein the flange has one of the following radial cross-section: a polygon, a circle, an oval, an ellipse or a combination thereof.

14. A vehicle comprising one or more vehicle wheels according to any one of claims 1 to 13.

15. A method for using the vehicle wheels according to any one of claims 1 to 13, comprising mounting the vehicle wheel to a vehicle (e.g. a car), and preferably driving the car.
